# EUROPEAN PATENT SPECIFICATION

(11) **EP 3 154 753 B1**
(45) Date of publication and mention of the grant of the patent: **11.07.2018**
(21) Application number: 14784523.4
(22) Date of filing: 12.09.2014
(51) Int. Cl.: B26D 7/02, B26D 1/30

(54) **APPARATUS FOR SLICING ROLLED UP CREPES**
VORRICHTUNG ZUM SCHNEIDEN VON GEROLLTEN CREPES
DISPOSITIF POUR LA DÉCOUPE DE CREPES ENROULÉS

(30) Priority: 11.06.2014 GB 201411457
(43) Date of publication of application: 19.04.2017
(73) Proprietor: Szilagyi, Imre Ivan, London, Greater London NW101SY (GB)
(72) Inventor: Szilagyi, Imre Ivan, London, Greater London NW101SY (GB)
(86) International application number: PCT/IB2014/064475
(87) International publication number: WO 2015/189665

(56) References cited:
- CN-A- 103 770 141
- CN-U- 201 471 504
- CN-U- 203 141 560
- SU-A1- 625 919
- US-A- 4 228 707

## Description

### Background

The recognition is that the commercially-made crepe, traditionally served up on a paper plate, a paper cone or in any other way, is an inconvenient way to consume this product and reduces its market potential.

I have solved this problem with the bite slicer apparatus, which slices a crepe into crepe bites on a paper plate ready to be served up. CN 201471504 U discloses a vegetable cutter with a knife unit composed of a number of parallel blades 1 that are swingable upon a mainboard by the use of a handle.

### Summary of the invention

The invention's aim is to provide a bite slicer apparatus that slices a crepe into bites. In addition, it is simple to use, easy-to-handle and easy-to-clean.

The invention's object, the bite slicer apparatus according to claim 1, consists of three main parts: the mainboard, the knife-unit and the bite-stabilizer.

The mainboard has been designed in the shape of a U-profile with the lower handle fitted on one side and the bearings fitted on the opposite side.

Inside the bearings is situated the axis. The knife-unit, which consists of a number of blades, swings 125° on the axis.

The bite-stabilizer, which consists of a number of D-rings, swings 160° on the axis.

### Advantages

The crepe has been made for commercial purposes and has been traditionally served up on either a paper plate, a paper cone or in any other way. The object of the invention, the bite slicer apparatus, has not been known before. It slices up a crepe simply and quickly.

The crepe gets sliced by a number of blades simultaneously. This results in the crepe filling remaining inside the bites

A crepe served in this way can be consumed easily, in a civilized manner and increases its market potential.

### Drawings

The further attributes and operations of the invention have been described below, where the invention will be reviewed in detail using a specific example. On the subjunctive illustration
Fig 1 The object of the invention, the bite slicer apparatus in closed position in axonometric view
Fig 2 The object of the invention, the bite slicer apparatus in side-view
Fig 3 The object of the invention, the bite slicer apparatus in opened position in axonometric view
Fig 4 The object of the invention, the bite slicer apparatus in front-view
Fig 5 The object of the invention, the bite slicer apparatus in rear-view
Fig 6 The object of the invention, the bite slicer apparatus knife-unit in axonometric view
Fig 7 The object of the invention, the bite slicer apparatus's bite-stabilizer in axonometric view

### Brief description of the drawings

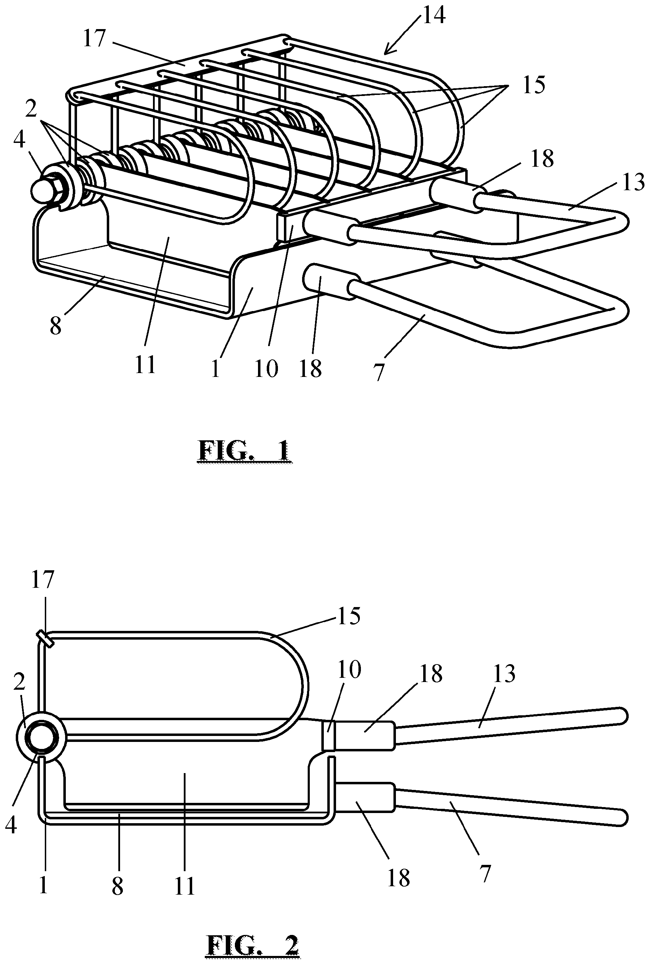

On Figure 1 the object of the invention the bite slicer apparatus can be seen in its closed position shown in axonometric view. The three main parts, mainboard (1) knife-unit (9) and the bite-stabilizer (14) are clearly visible.

The mainboard (1) of the bite slicer apparatus has been designed in the shape of a U-profile with the lower handle (7) fitted on one side and secured with a sleeve (18) fitting and the bearings (2) have been fitted on the opposite side. Inside the bearings (2) is the axis (3) and dome nuts (4) are fitted on both ends of the axis (3).

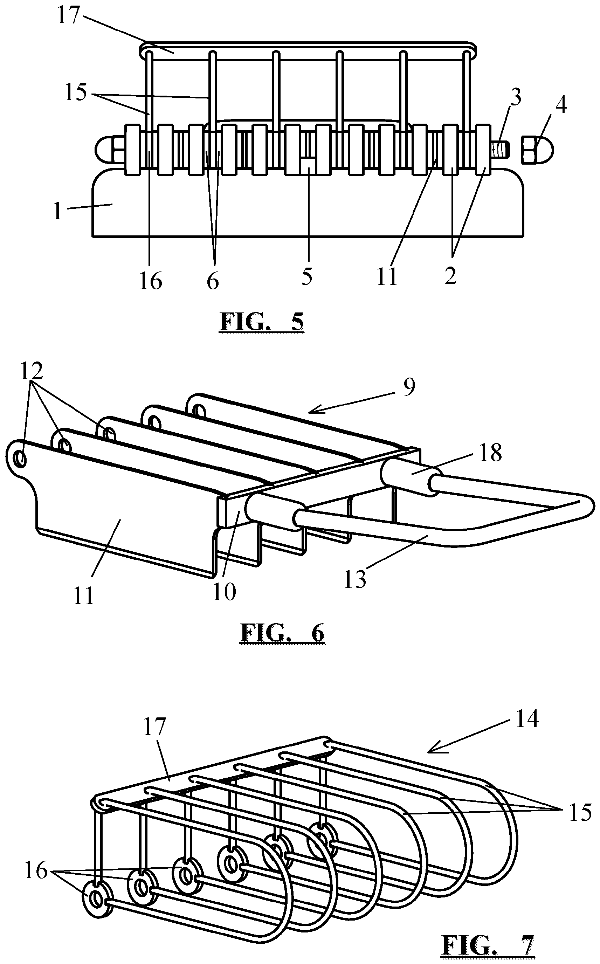

Figure 6 is represented by the knife-unit (9) independently. It consists of a number of blades (11) alongside each other and set equidistant using the spacer-rings (6) as shown on Figure 5, on one side and with the blades' boreholes (12) fitted on the axis (3), the other side is connected with the blade connector profile (10).

The bite slicer apparatus' upper handle (13) is secured on the knife-unit's (9) blade connector profile (10) with sleeve fitting (18).

Figure 7 is represented by the bite-stabilizer (9) independently. It is made up of a number of D-rings (15) alongside each other and set equidistant using the spacer-rings (6) as shown on Figure 5, on one side with the stabilizer-rings (16) fitted on the axis (3), the other side is connected with the D-ring connector profile (17).

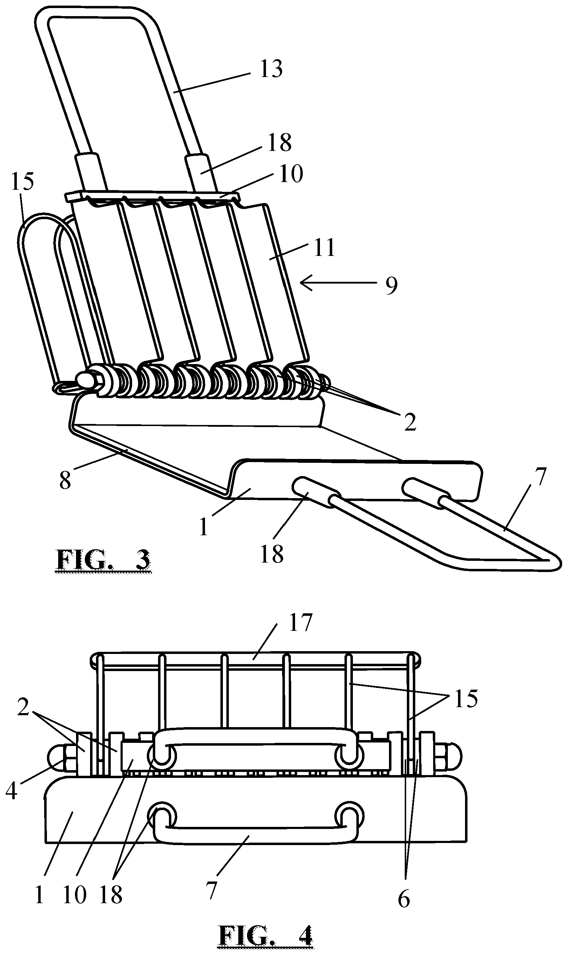

Figure 2 shows the bite slicer apparatus in side view and Figure 4 shows the front view of the bite slicer apparatus the knife-unit's (9) closing to the mainboard (1) is beneficially made to leave a practical gap between an exchangeable, unattached silicon sheet (8), which is fitted on the mainboard (1), and the edges of the knife-unit's (9) blades (11).

Figure 5 shows the rear view of the bite slicer apparatus where a buffer (5) has been built in the middle of the row of bearings (2) and is responsible for stopping the knife-unit (9) at 125°.

### The operation of the bite slicer apparatus

The rolled up crepe is placed on the paper plate and we place it in the open position (Figure 3) of the bite slicer apparatus mainboard's (1) silicone sheet (8).

Then we swing the knife-unit (9) down using the upper handle (13) until the point it reaches the mainboard (1) and slices the crepe into bites.

After that we close the bite-stabilizer (14) until the D-rings (15) sit on the sliced bites.

At this point the crepe bites become "fixed" to the paper plate.

This is necessary as the 150-180° Celsius hot crepe bites stick in between the blades (11) and they would move together with the knife-unit (9) when it is lifted up. The bite-stabilizer (14) prevents that and the crepe bites remain in perfect shape and in the same position on the paper plate.

After this we move the knife-unit (9) and the bite-stabilizer (14) into the open position and we remove the paper plate with the sliced up crepe which had been placed on the mainboard's (1) silicone sheet (8).

## Claims

1. An apparatus for slicing up a crepe on a paper plate, wherein the apparatus consists of three main parts: a mainboard (1), a knife unit (9) and a bite stabilizer (14), wherein the bite stabilizer comprises a mainboard (1) with the shape of a U-profile with a lower handle (7) fitted on one side and bearings (2) fitted on the opposite side, wherein inside the bearings (2) the axis (3) is located and wherein the knife unit consists of a number of blades (11) and swings 125° on the axis (3) and the bite stabilizer (14) consists of a number of D-rings (15) and swings 160° on the axis (3).

2. A bite slicer apparatus according to claim 1 wherein the knife-unit (9) is made up of a number of blades (11) alongside each other which are set equidistant using spacer rings (6) on one side with each of the blades' boreholes (12) being fitted on the axis (3), the other side being connected with the blade connector profile (10).

3. A bite slicer apparatus according to claim 1 wherein the knife unit (9) closes to the mainboard and is preferably made to leave a practical gap between an exchangeable, unattached silicon sheet (8), which is placed on the mainboard (1), and the edges of the knife-unit's (9) blades (11) .

4. A bite slicer apparatus according to claim 1 wherein the bite-stabilizer (14) consists of a number of D-rings (15) alongside each other which are set equidistant using spacer-rings (6) on one side with the stabilizer-ring (16) being on the axis (3), the other side being connected with the D-ring connector profile (17).

5. A bite slicer apparatus according to claim 1 wherein the knife-unit (9) lifts up to 75° at which point the blades' (11) spines hit the bite-stabilizer's (14) D-ring connector profile (17) in its closed position to lift up the bite-stabilizer (14) to its open position.

## Patentansprüche

1. Vorrichtung zum Aufschneiden einer Palatschinke (eines Krepps) auf einem Pappteller, **dadurch gekennzeichnet, dass** die Vorrichtung aus drei Hauptteilen besteht: Aus einer Hauptplatte (1), einer Messereinheit (9) und einem Bissstabilisator (14), **dadurch gekennzeichnet, dass** der Bissstabilisator aus einer Hauptplatte besteht (1) mit einem U-Profil mit einem unteren Griff (7), der auf der einen Seite angebracht wurde, und auf der gegenüberliegenden Seite mit Lagern befestigt wurde (2), wobei innerhalb der Lager (2) eine Achse (3) positioniert wurde, **dadurch gekennzeichnet, dass** die Messereinheit aus einer Anzahl von Klingen (11) besteht und um 125 ° auf der Achse (3) schwingt, ferner der Bissstabilisator (14) aus einer gewissen Anzahl von D-Ringen (15) besteht und um 160 ° auf der Achse (3) schwingt.

2. Schneidegerät nach Anspruchspunkt 1, **dadurch gekennzeichnet, dass** die Messereinheit (9) aus einer gewissen Anzahl von Klingen (11) besteht, die nebeneinander geordnet und äquidistant sind, eine jede Klinge ist auf der einen Seite unter Verwendung von Abstandsringen (6) durch Bohrungen (12) auf der Achse (3) angebracht, wobei die andere Seite mit dem Klinge-Verbindungsprofil (10) verbunden ist.

3. Schneidegerät nach Anspruchspunkt 1, **dadurch gekennzeichnet, dass** sich die Messereinheit (9) zur Hauptplatte (1) hin schließt und möglichst so gefertigt wird, dass sie vorzugsweise einen Spalt zwischen der auswechselbaren, nicht befestigten Silikonplatte (8), die sich auf der Hauptplatte (1) befindet, und den Kanten der Klingen (9) der Messereinheit (11) offenlässt.

4. Schneidegerät nach Anspruchspunkt 1, **dadurch gekennzeichnet, dass** der Bissstabilisator (14) aus einer gewissen Anzahl der D-Ringe (15) besteht, die nebeneinanderliegen und unter Verwendung von Abstandsringen (6) äquidistant eingestellt und auf der einen Seite mit dem Stabilisator-Ring (16) auf die Achse (3) befestigt sind, wobei die andere Seite mit dem D-Ring-Verbindungsprofil (17) verbunden ist.

5. Schneidegerät nach Anspruchspunkt 1, wobei sich die Messereinheit (9) um 75 ° anhebt, **dadurch gekennzeichnet, dass** die Dorne (11) der Klingen (11) an diesem Punkt das D-Ring-Verbindungsprofil (17) des Bissstabilisators (14) in geschlossener Position erreichen, um den Bissstabilisator (14) in eine offene Position anzuheben.

## Revendications

1. Un appareil servant à trancher une crêpe sur une plaque en papier, l'appareil étant constitué de trois parties principales : le plateau principal (1), l'unité à couteaux (9) et le stabilisateur de portions en bouchées (14) constitué du plateau principal (1) ayant été conçu sous la forme d'un profilé en U avec la poignée inférieure (7) montée sur un côté et les paliers (2) montés sur le côté opposé, les paliers (2) renfermant l'axe (3), l'unité à couteaux constituée d'un certain nombre de lames (11) oscillant de 125° sur l'axe (3), le stabilisateur de portions en bouchées (14) constitué d'un certain nombre d'anneaux en D (15) oscillant de 160° sur l'axe (3).

2. Un appareil trancheur de portions en bouchées selon la revendication 1, dans lequel l'unité à couteaux (9) est composée d'un certain nombre de lames (11) placées l'une à côté de l'autre d'une distance identique à l'aide de bagues d'écartement (6) d'un côté, chacun des trous de forage des lames (12) étant monté sur l'axe (3), l'autre côté étant relié au profil de connecteur de lame (10).

3. Appareil trancheur de portions en bouchées selon la revendication 1, dans lequel l'unité de couteaux (9) se ferme sur le plateau principal (1) et est de préférence conçue pour laisser un espace pratique entre une feuille de silicone (8) interchangeable non fixée, placée sur le plateau principal (1), et les bords des lames (11) de l'unité de couteaux (9).

4. Un appareil trancheur de portions en bouchées selon la revendication 1, dans lequel le stabilisateur de portions en bouchées (14) est composé d'un certain nombre d'anneaux en D (15) placées l'une à côté de l'autre d'une distance identique à l'aide de bagues d'écartement (6) d'un côté avec la bague stabilisateur (16) étant monté sur l'axe (3), l'autre côté étant relié au profil de connecteur de l'anneau en D (17).

5. Appareil trancheur de portions en bouchées selon la revendication 1, dans lequel l'unité de couteaux (9) soulève jusqu'à 75°, ce qui dirige les épines des lames (11) à frapper le profil de connecteur de l'anneau en D (17) du stabilisateur de portions en bouchées (14) dans sa position fermée pour soulever le stabilisateur de portions en bouchées (14) dans sa position ouverte.
